# EUROPEAN PATENT APPLICATION

(11) **EP 2 009 942 A1**
(43) Date of publication of application: **31.12.2008**
(21) Application number: 07012615.6
(22) Date of filing: 27.06.2007
(51) Int. Cl.: H04Q 7/38

(54) **Method and system for optimized relocation in a mobile network**

(71) Applicant: Nokia Siemens Networks Oy, 02610 Espoo (FI)
(72) Inventor: Grahn, Tom, 01620 Vantaa (FI); Huomo, Miikka, 02760 Espoo (FI); Peltola, Tuomo, 05200 Rajamäki (FI)
(74) Representative: Bruglachner, Thomas E.

(57) **Abstract**

The present invention describes a method and a system for optimized relocation in a mobile network, comprising a source transmitter/receiver (1), a target transmitter/receiver (2), a serving support node (3) and a gateway support node (4), wherein a Direct Tunnel Context message is submitted from the serving support node (3) to the gateway support node (4).

## Description

The present invention relates generally to a method and a system to optimize relocation in a mobile network and, more particularly, to a method and a system to optimize SRNS (Serving Radio Network Subsystem) relocation in a flat mobile access network using I-HSPA (Internet High Speed Packet Access) for the core network side.

A Radio Access Network (RAN) performs the radio functionality of a mobile network, as well as providing the connection to the Core Network (CN). The RAN typically includes a controller, e.g a Radio Network Controller (RNC) in 3GPP (Third Generation Partnership Project) or a Base Station Controller (BSC) in 3GPP2 (Third Generation Partnership Project 2), and several transmitter/receivers (e.g. NodeB in 3GPP, Base Transceiver Station (BTS) in 3GPP2).

HSDPA (High Speed Downlink Packet Access) and HSUPA (High Speed Uplink Packet Access) require the Core Network (CN) which is capable for fast and efficient packet data transfer. I-HSPA (Internet High Speed Packet Access) is one example of such network architecture, which is a cost-efficient PS (Packet Switched)-only WCDMA network (Wideband Code Division Multiple Access). In particular, I-HSPA is effective due to its flat architecture.

In I-HSPA radio access architecture the RNC functions are moved to the transmitter/receiver, i.e. the I-HSPA NodeB. I-HSPA system uses e.g. 3GPP Release 5 and later Release 6 air interface with no modifications.

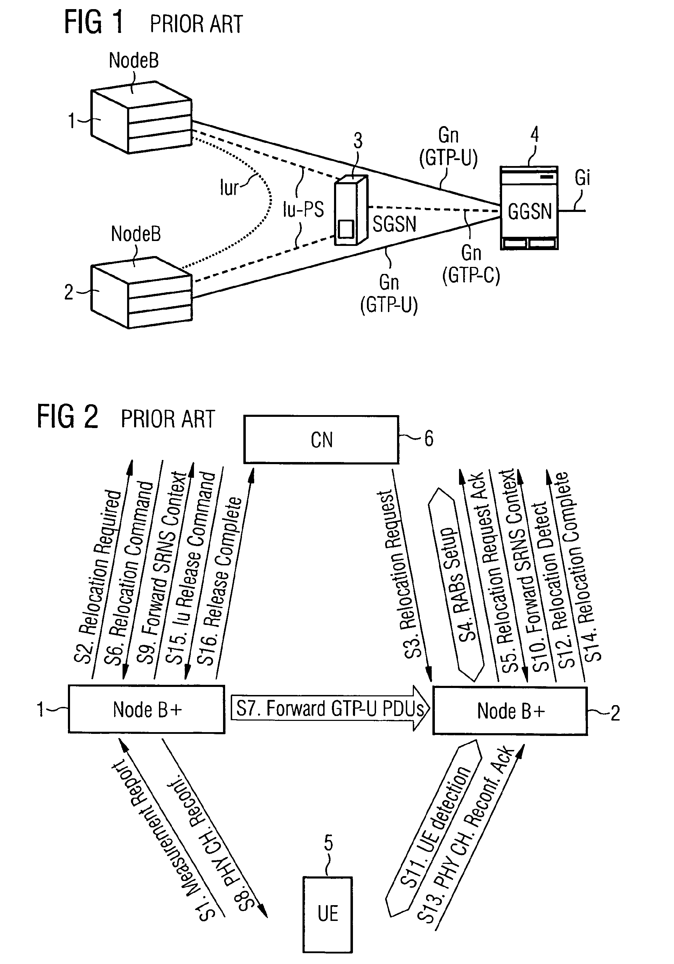

Figure 1 illustrates a simplified block diagram of a prior art I-HSPA architecture. I-HSPA NodeB includes RNC alike functionality with standard Iub interface towards NodeB and Iu control plane interface towards packet switched CN. The Interface between the I-HSPA NodeB's 1 and 2 is a Iur Interface (or extended Iur). I-HSPA is LTE/SAE predecessor and is planned to support PS (Packet Switched) only services, but it can as well implement Iu_cs interface towards the CN.

A Serving GPRS Support Node (SGSN) 3 sees the I-HSPA NodeB 1 and 2 as a Radio Network Controller (RNC). When the serving I-HSPA NodeB changes and a (not shown) user or user equipment (UE) has active data transfer, e.g. PMM CONNECTED with Radio Access Bearer (RAB) a Relocation is triggered. The Interface between the Serving GPRS Support Node (SGSN) 3 and the I-HSPA NodeB 1 and 2 is a Iu-PS Interface (Packet Switched).

A Gateway GPRS Support Node (GGSN) 4 supports the edge routing function of the mobile network and is connected to the Serving GPRS Support Node (SGSN) 3 via a Gn (GTP-C) Interface (GPRS Tunneling Protocol-Control). Moreover, the Gateway GPRS Support Node (GGSN) 4 is connected to the I-HSPA NodeB 1 and 2 via a Gn (GTP-U) Interface (GPRS Tunneling Protocol-User). To external packet data networks (not shown) the GGSN 4 may perform the task of e.g. an IP router (Internet Protocol). Firewall and filtering functionality, to protect the integrity of the e.g. GPRS Core Network (CN), are also associated with the GGSN 4 along with e.g. a billing function. The interface between the GGSN 4 and the external Public Data Network (PDN) (not shown) is a Gi Interface.

Relocation requires a lot of signalling capacity from the Core Network (CN), therefore either the number of relocations should be minimized or the relocation procedure should be simplified.

Figure 2 illustrates a prior art relocation procedure. Like reference numerals define same network elements as in Figure 1.

According to Figure 2 a User Equipment (UE) 5, e.g. a mobile telephone, PDA or personal computer, submits in a step S1 a 'Measurement Report' message to a source transmitter/receiver 1 which sends a 'Relocation Required' message in a step S2 to the Core Network (CN) 6, e.g. to a SGSN in the CN. The CN 6 submits a 'Relocation Request' message to a target transmitter/receiver 2 in a step S3, while in a step S4 a 'Setup of the RABs' (Radio Access Bearer) is carried out. The target transmitter/receiver 2 acknowledges this Setup procedure with a 'Relocation Request Acknowledge' message in a step S5 to the CN 6, which submits a 'Relocation Command' message in a step S6 to the source transmitter/receiver 1, i.e. a source NodeB 1. In step S7 the source NodeB 1 may start forwarding 'GTP-U PDUs' (GPRS Tunneling Protocol-User Protocol Data Units) of the different RABs to the target NodeB 2, depending e.g. on the QoS Profile (Quality of Service) for minimizing/avoiding packet loss.

In a step S8 a 'Physical Channel Reconfiguration' message is sent by the source NodeB 1 with information to access the cell in the target NodeB 2. In Step S9 source NodeB 1 forwards SRNS Context information (Serving Radio Network Subsystem) to the CN 6 which is further forwarded in step S10 to the target NodeB 2.

Physical layer synchronization and radio link establishment are performed between the UE 5 and the target cell in the target NodeB 2. A 'Relocation Detect' message is sent to the CN 6 in step S12 and a 'Physical Channel Reconfiguration Acknowledge' message is sent by the UE 5 to the target NodeB 2. In step S14 a 'Relocation Complete' message is submitted to the CN 6 and in step S15 a 'Iu Release Command' is sent to the source NodeB 1 which confirms in step S16 to CN 6 with a 'Iu Release Complete' message. Thus 14 messages are needed in this prior art procedure.

It should be realized by those skilled in the art that the specific messages used in the description, e.g. 'Relocation Complete+', are just frames for the content (i.e. for information only) and do not necessarily refer to actual names of messages. As the names of messages may change in standardization a plurality of different names having the same meaning as defined in the description are also possible.

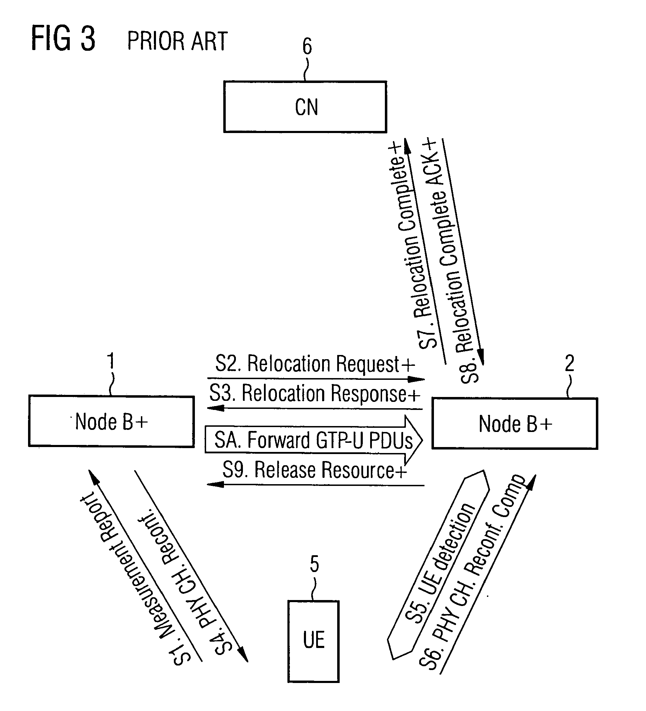

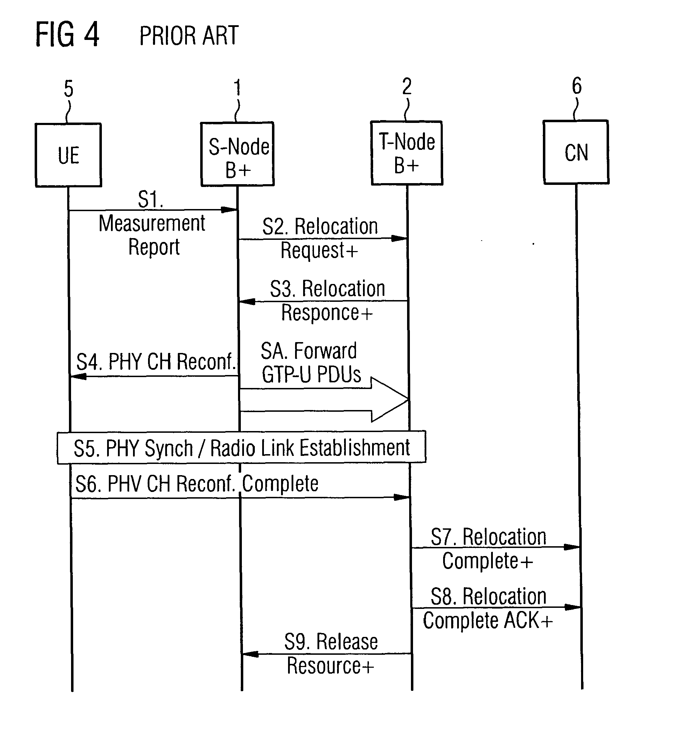

Figure 3 illustrates a further prior art relocation procedure with reduced number (only 8) of messages while Figure 4 illustrates a prior art status diagram according to Figure 3. Like reference numerals define same network elements as in Figure 2.

In step S1 of Figures 3 and 4, based on measurement reports from the UE 5 (and possibly some other RRM specific information), the source NodeB 1 decides to handover the UE 5 to a cell controlled by the target NodeB 2.

In step S2 the source NodeB 1 issues a 'Relocation Request' message to the target NodeB 2 passing the necessary information (context transfer) to prepare the HO (Hand Over) at the target side. After performing Admission Control, the target NodeB 2 configures the required resources.

In step S3 a 'Relocation Response' message is sent to the source NodeB 1 with the necessary information for the UE 5 to reconfigure the radio path towards the target NodeB 2.

In step S4 a 'Physical Channel Reconfiguration' message is sent by the source NodeB 1 with the information to access the cell in the target NodeB 2.

In a step SA the source NodeB 1 can start forwarding 'GTP-U PDUs' of the different RABs to the target NodeB 2, depending on their QoS Profile (means for minimizing/avoiding packet loss).

In step S5 the physical layer synchronization and radio link establishment are performed with the target cell in the target NodeB 2.

In step S6 the UE 5 sends a 'Physical Channel Reconfiguration Complete' message to the target cell in the target NodeB 2.

In step S7 the target NodeB 2 sends a 'Relocation Complete' message to the CN 6 with a request to establish the different RABs between target NodeB 2 and CN 6.

In step S8 the CN 6 responds with a 'Relocation Complete Acknowledge' message and starts to forward the data in the new path.

Finally in step S9 the target NodeB 2 initiates the release of the resources in the source NodeB 1.

Even if this prior art constitutes already a reduction of the number of messages, there is still a need in the prior art to finalize the solution for the core network side. Also there is a possibility to further optimize the prior art solution.

According to an embodiment of the present invention there is provided a method and system for optimized relocation in a mobile network comprising a source transmitter/receiver, a target transmitter/receiver, a serving support node and a gateway support node, wherein the serving support node submits a Direct Tunnel Context message to the gateway support node.

The foregoing has outlined rather broadly the features and technical advantages of embodiments of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

For a more complete understanding of the present invention, and the advantages thereof, reference is now made to the following descriptions taken in conjunction with the accompanying drawings, in which:
Figure 1 illustrates a simplified block diagram of a prior art I-HSPA architecture;
Figure 2 illustrates a prior art relocation procedure;
Figure 3 illustrates a further prior art relocation procedure;
Figure 4 illustrates a prior art status diagram according to Figure 3;
Figure 5 illustrates a status diagram for the optimization of the relocation procedure in a core network side in accordance with an embodiment of the present invention;
Figure 6 illustrates a status diagram for the optimization of the relocation procedure in a core network side in accordance with a further embodiment of the present invention; and
Figure 7 illustrates a status diagram for the optimization of the relocation procedure in a core network side in accordance with still a further embodiment of the present invention.

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The present invention will be described with respect to preferred embodiments in a specific context, namely optimized relocation in Internet High Speed Packet Access Networks (I-HSPA) for mobile user equipment. The invention may also be applied, however, to other relocation procedures in access networks where an improvement of a core network side is desired.

For the following description it is particularly referred to the 3GPP documents: 3GPP TSG-RAN WG3 Meeting #55 (R3-070158): "Enhanced SRNS relocation for the HSPA Evolution", 3GPP TS 25.331: "Radio Resource Control (RRC); Protocol Specification", and 3GPP TS 23.060: "General Packet Radio Service (GPRS); Service Description; Stage 2", which are herewith incorporated by reference.

The present invention provides solutions for the optimization, in particular, for the core network side. The Intra SGSN case may be considered as the basic procedure, the other enhance that.

### Intra SGSN

According to this embodiment the proposed relocation procedure should be restricted to one SGSN area only as there is no time for SGSN to fetch the MM/PDP contexts (Packet Data Protocol) from a source SGSN (oldSGSN). Therefore in case of inter SGSN relocation the I-HSPA NodeB should trigger normal relocation procedure (as it does currently).

I-HSPA NodeB should know e.g. from configuration that which of the neighbouring cells (I-HSPA NodeB's) belong to the area of same CN node or CN node pool (refer to 3GPP TS 23.236). In case CN Node supports optimized relocation defined in Figure 3 and 4 the I-HSPA NodeB is allowed to trigger the procedure. The CN capabilities could be for example:
1) Negotiated in Iu reset or
2) Configured to the NodeBs by O&M (Operations & Maintenance) or
3) Alternatively NodeBs could exchange this information and e.g. determine whether the optimized procedure can be triggered based on the SGSN address.
Note: also in case of inter SGSN relocation the CN should be responsible of establishing/releasing RAN resources. For example target SGSN (newSGSN) should establish RABs in the target NodeB and source SGSN (oldSGSN) should deactivate RABs in source NodeB after procedure is finished.

### Interworking with DT

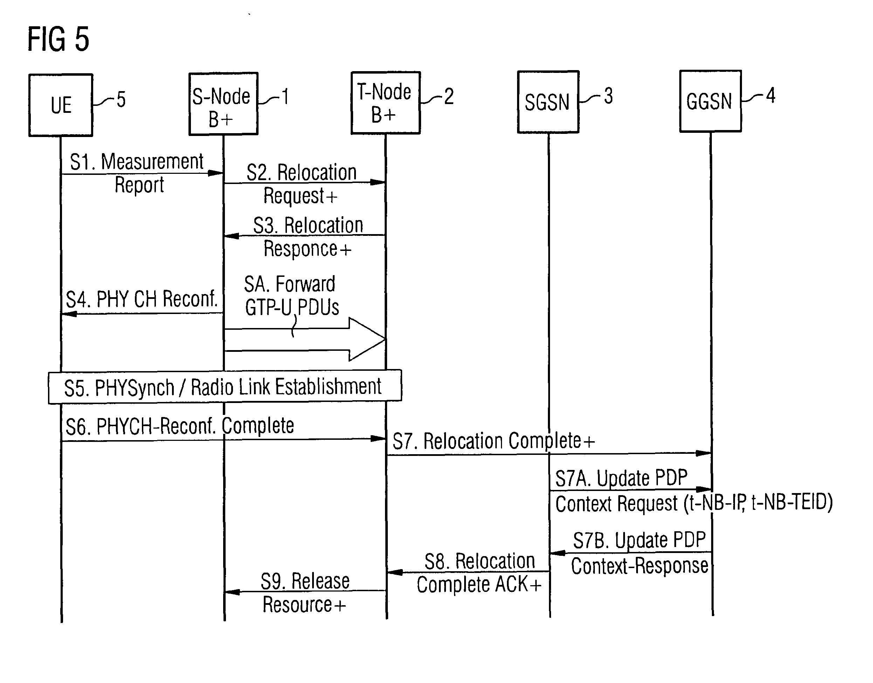

Figure 5 illustrates a status diagram for the optimization of a core network side in accordance with an embodiment of the present invention using Direct Tunnelling. Like reference numerals define same network elements and same method steps as in Figure 4.

According to this embodiment, if the user that makes the relocation has Direct Tunnel contexts the SGSN 3 (Serving GPRS Support Node) must first update the contexts towards the GGSN 4 (Gateway GPRS Support Node) to move e.g. the tunnel endpoint to the target NodeB 2 (step S7A). In step S7 the SGSN 3 gives the GGSN 4 the target NodeB's information that it has received in the 'Relocation Complete+' message (this may be defined in the invention by 'I-HSPA relocation optimization, RAB activation in target NodeB').

According to one aspect of the present invention after the GGSN 4 has responded in a step S7B with an 'Update PDP Context Response' message, the SGSN 3 may send a 'Relocation Complete Ack+' to the target NodeB 2 in step S8 resulting that in step S9 target NodeB 2 sends a "Release Resource" message to the source NodeB 1 to complete the relocation.

Alternatively SGSN 3 may accept the relocation immediately by sending 'Relocation Complete Ack+' back to the target NodeB 2 in step S8 (without step S7B). This is possible since in case GGSN 4 is not able to respond the resources are anyway released. GGSN 4 may receive GTP error indication (GPRS Tunnelling Protocol) from the source NodeB 1 (not shown in Figure 5) if it does not recognize the TEIDs (Tunnel Endpoint Identifier). GGSN 4 notices the SGSN 3 about the situation which should either release related RABs (Radio Access Bearer) or re-establish PDP contexts (Packet Data Protocol) which constitute a logical association between mobile station (MS) and the Public Data Network (PDN).

In case the target NodeB 2 is unable to re-establish all RABs that were active in the source NodeB 1 then the SGSN 3 may decide to preserve or deactivate the related PDP contexts according to currently specified procedures. At the very least it must, for the context that has no RABs, move the tunnel endpoint from the NodeB to itself, in this situation the GGSN 4 may send packets and the SGSN 3 can try to re-establish the RABs.

It should be noted by those skilled in the art that the 3GPP Release 8 Direct Tunnel functionality does not work exactly in the same way as 3GPP Release 7. The Biggest difference is that the SGSN will not have a user plane, e.g. the SGSN doesn't move the tunnel to itself. This functionality is not fully specified yet, however the following option could be possible: GGSN or (SAE) GW is expected to buffer the user data and page the user (via SGSN or MME). The 3GPP Release 8 functionality may include simultaneous duplication of data to both old and new node B. It should further be noted that in SAE/LTE (3GPP Release 8) the MME (Mobility Management Entity) is logically/architecturally same as the SGSN and UPE (User Plane Entity)/SAE Gateway is logically/architecturally same as the GGSN.

### Inter SGSN change:

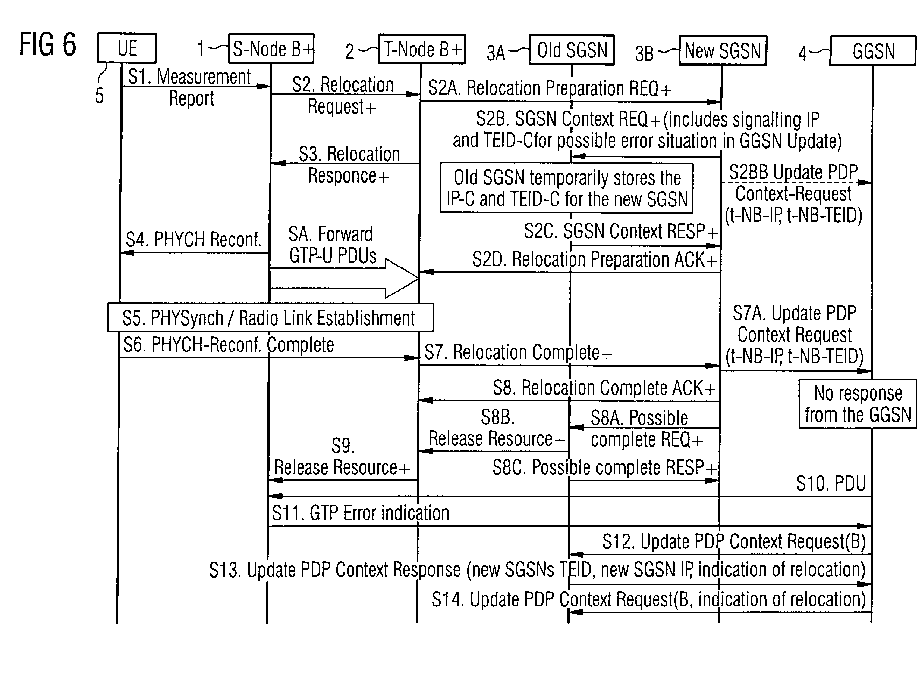

Figure 6 illustrates a status diagram for the further optimization of a relocation procedure in a core network side in accordance with a further embodiment of the present invention using inter SGSN interworking with Direct Tunnelling. Like reference numerals define same network elements and same method steps as in Figure 5.

This embodiment proposes necessary additions to the solution depicted in the previous chapter to be able to support Inter SGSN relocation procedure and possible authentication.

In case the GGSN 4 does not respond to the update, i.e. message 'Update PDP Context Request' in steps S2BB and/or S7A, the SGSN 3 will continue the relocation procedure. When this happens and the GGSN 4 continues sending downlink data it will go to the source NodeB 1 in step S10. For this situation a newSGSN 3B could send the TEID and IP-address it will use towards the GGSN 4 in a 'SGSN Context Request+' message in step S2B. This allows an oldSGSN 3A to tell the GGSN 4 of these in case the source NodeB 1 sends the message 'GTP Error Indication' to the GGSN 4 (see step S11), it should also be indicated that a relocation has taken place.

Note: Step S7 could as well be a 'Relocation Detect+' message which is used to prepare newSGSN 3B for relocation as well as establish Iu/SCCP connection (Signalling Connection Control Part) between the target NodeB 2 and the newSGSN 3B. The PDP context update to the GGSN 4 as well as release of old resources could be done after the 'Relocation complete+' message in step S7 as well by sending the message 'Update PDP Context Request' in step S7A. More detailed descriptions are done later.

### RAB activation in target NodeB

For example newSGSN 3B could handle the 'Relocation Complete+' message as a RAU (Routing Area Update) except that it should automatically activate all relocated RABs. I.e. the target NodeB 2 shall activate the RABs before sending the 'Relocation Complete+' message to newSGSN 3B in step S7. The message shall contain all relevant information to allow the newSGSN 3B to update the existing RABs to point to the target NodeB 2, this includes a list of successfully established RABs and failed RAB establishments. So contrary to current functionality the newSGSN 3B does not request the establishment of the RABs in the target nodeB 2. The newSGSN 3B could optionally (just in case) start a RAB release procedure towards the source NodeB 1 (see steps S8A, S8B, S9).

If RAB values are modified the newSGSN 3B should trigger PDP context modification procedure towards the GGSN 4. This is of course handled at the same time the new location is updated to the GGSN 4 using e.g. the PDP context update procedure specified in 3GPP TS 29.060.

The parameters carried in the "Relocation Complete+" message in step S7 are e.g. the following (specified by 3GPP) for each RAB:
- Traffic Class
- RAB Asymmetry Indicator
- Maximum Bit Rate
- Guaranteed Bit Rate
- Delivery Order
- Maximum SDU Size (Service Data Unit)
- SDU parameters
- Transfer Delay
- Traffic Handling Priority
- Allocation/Retention priority
- Source Statistics Descriptor
- Relocation Requirement
- Signaling Indication
- TEID (Tunnel Endpoint IDentifier)
- User plane address

Also the following information could be needed:
- P-TMSI (Packet-Temporary Mobile Subscriber Identity)
- LAI (Local Area Identity)
- RAC (Routing Area Code)
- SAI (Service Area Identifier)
- Iu Signalling Connection Identifier
- Global RNC-ID
- GERAN Classmark (GSM Edge Radio Access Network)
- Selected PLMN Identity
- NAS Sequence Number (Network Access Server)
- Permanent NAS UE Identity
- Redirect Attempt Flag

In the following two implementation alternatives are described in connection with Figure 6 which could further optimize the relocation on core network side.

### Alternative 1)

This alternative proposes least changes to the current solution, but on the other hand reserves radio resources for longer period of time in both source and target RANs (Radio Access Networks). The solution is simple such that after CN node or the newSGSN 3B receives message 'Relocation Complete+' in step S7 it triggers e.g. an 'Inter SGSN RAU procedure' as depicted in the 3GPP TS 23.060.

The newSGSN 3B could retrieve the MM/PDP contexts from the oldSGSN 3A in order to be able to proceed with the relocation. It could send a message 'SGSN Context info Request+' (see step S2B) to the oldSGSN 3A which responds with a message 'SGSN Context Response+' (see step S2C) including the requested information. At the same time the newSGSN 3B may also authenticate the subscriber with P-TMSI signature. When newSGSN 3B received the MM/PDP Context information it can establish RABs and update the MS location to GGSN 4 as well as HLR (and MSC/VLR) (see optional step S2BB).

### Alternative 2)

If continuing with the relocation the target NodeB 2 could notify newSGSN 3B about the relocation immediately when it receives the message 'Relocation Request+' in step S2 from the source NodeB 1. The newSGSN 3B needs at least P-TMSI, old RAI+NRI and old RNC-ID information to be able to proceed with SGSN context transfer. This information could be submitted in step 2A in a message 'Relocation Preparation Request+' to the newSGSN 3B. Preferably, the context transfer would not be a 3GPP specified procedure but more like context copying as the MM/PDP contexts must be left to the oldSGSN 3A as well in case the relocation fails. In detail, after a 'SGSN Context Request+' message sent to the oldSGSN 3A in a step S2B the oldSGSN temporarily stores e.g. the IP-C and TEID-C for the new SGSN 3B and provides this information with a message 'SGSN Context Response+' to the newSGSN 3B in step S2C. Only when the relocation is successfully performed in RAN the newSGSN 3B triggers above mentioned location updates and any subscriber related resources are removed from the oldSGSN 3A. In a step S2D the newSGSN 3B acknowledges with a message 'Relocation Preparation Acknowledge+'.

Thus, the present invention delivers not only an optimized relocation procedure for the core network side but also improves security issues.

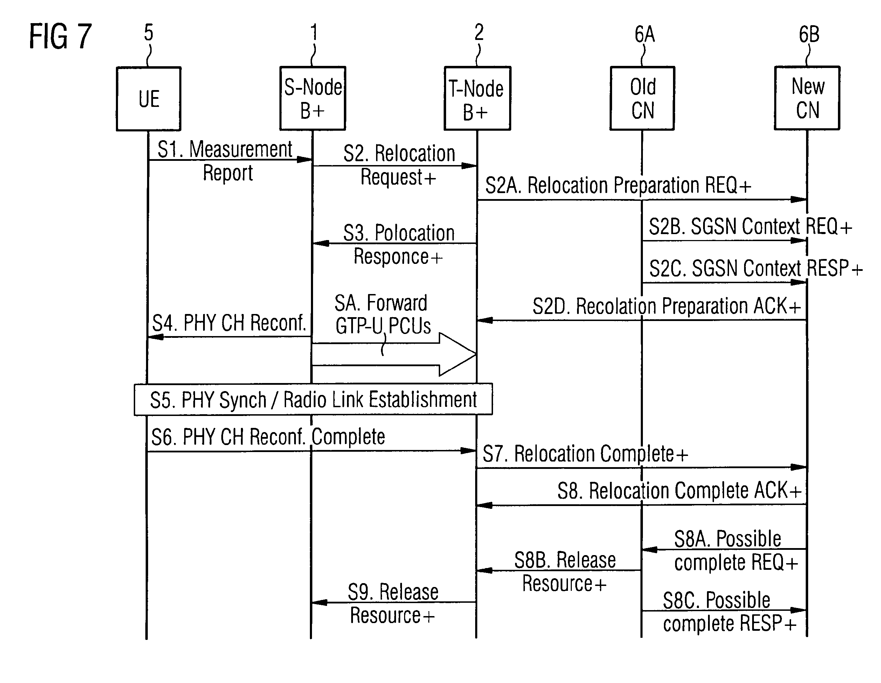

Moreover, the procedure described before could be as simple as specified in Figure 7, wherein the oldSSGN now refers to an oldCN 6A and the newSSGN refers to a newCN 6B while the GGSN is not shown. Like reference numerals define same network elements and same method steps as in Figure 6 for which reason a reiteration of the different method steps is rendered unnecessary.

Although embodiments of the present invention and their advantages have been described in detail, it should be understood that various changes, substitutions and alterations can be made herein without departing from the spirit and scope of the invention as defined by the appended claims. For example, it will be readily understood by those skilled in the art that many of the features, functions, processes and materials described herein may be varied while remaining within the scope of the present invention. Moreover, the scope of the present application is not intended to be limited to the particular embodiments of the system, process, machine, manufacture, composition of matter, means, methods, or steps, presently existing or later to be developed, that perform substantially the same function or achieve substantially the same result as the corresponding embodiments described herein may be utilized according to the present invention. Accordingly, the appended claims are intended to include within their scope such systems, processes, machines, manufacture, compositions of matter, means, methods, or steps.

### Reference list

- 1: source transmitter/receiver
- 2: target transmitter/receiver
- 3, 3A, 3B: serving support node
- 4: gateway support node
- 5: user equipment
- 6, 6A, 6B: core network
- S1 - S16, SA: method steps

## Claims

1. A method for optimized relocation in a mobile network comprising a source transmitter/receiver (1), a target transmitter/receiver (2), a serving support node (3) and a gateway support node (4), said method comprising the step: submitting a Direct Tunnel Context message from said serving support node (3) to said gateway support node (4).

2. The method of claim 1, wherein an Update PDP Context Request message (S2BB; S7A) is submitted from said serving support node (3) to said gateway support node (4).

3. The method of claim 2, wherein an Update PDP Context Response message (S7B; S12) is further submitted from said gateway support node (4) to said serving support node (3).

4. The method of any of claims 1 to 3, wherein said Direct Tunnel Context message (2BB; 7A) includes a Tunnel Endpoint Identifier information (t-NB-TEID) and an IP-adress information (t-NB-IP) used for said target transmitter/receiver (2).

5. The method of any of claims 1 to 4, wherein said serving support node includes a first serving support node (3A) and a second serving support node (3B), wherein said Direct Tunnel Context message (S2BB, S7A) is submitted from said second serving support node (3B) to said gateway support node (4).

6. The method of claim 5, further comprising the steps:
submitting a Relocation Preparation Request message (S2A) from said target transmitter/receiver (2) to said second serving support node (3B);
submitting a transmitter/receiver Context Request message (S2B) from said second serving support node (3B) to said first serving support node (3A);
temporarily storing context information in said first serving support node (3A);
submitting a transmitter/receiver Context Request message (S2C) from said first serving support node (3A) to said second serving support node (3B); and
submitting a Relocation Preparation Acknowledge message (S2D) from said second serving support node (3B) to said target transmitter/receiver (2).

7. The method of claim 6, wherein said Direct Tunnel Context message (S2BB) is submitted after said Relocation Preparation Request message (S2A).

8. The method of any of claims 1 to 7, further comprising the step:
submitting a Relocation Complete message (S7) from said target transmitter/receiver (2), wherein said Direct Tunnel Context message (S7A) is further submitted after said Relocation Complete message (S7).

9. The method of any of claims 5 to 8, further comprising the steps:
submitting a Relocation Complete Acknowledge message (S8) from said second serving support node (3B) to said target transmitter/receiver (2);
submitting a Possible Complete Request message (8A) from said second serving support node (3B) to said first serving support node (3A);
submitting a Release Resources message (8B) from said first serving support node (3A) to said target transmitter/receiver (2); and
submitting a Possible Complete Response message (8C) from said first serving support node (3A) to said second serving support node (3B).

10. The method of any of claims 5 to 9, further comprising the steps:
submitting a PDU message (S10) from said gateway support node (4) to said source transmitter/receiver (1);
submitting a GTP Error Indication (S11) from said source transmitter/receiver (1) to said gateway support node (4); submitting a further Direct Tunnel Context Request message (S12) from said gateway support node (4) to said first serving support node (3A);
submitting a further Direct Tunnel Context Response message (S13) from said first serving support node (3A) to said gateway support node (4) indicating a relocation information, a Tunnel Endpoint Identifier information (SGSN-TEID) and an IP-adress information (SGSN-IP) used for said second serving support node (3B); and
submitting a further Direct Tunnel Context Request message (S14) from said gateway support node (4) to said first serving support node (3A) indicating a relocation information.

11. The method of any of claims 5 to 10, wherein said first serving support node (3A) is part of a first core network (6A) and said second serving support node (3B) is part of a second core network (6B).

12. The method of any of claims 1 to 11, wherein said serving support nodes (3A, 3B) are Serving GPRS Support Nodes.

13. The method of any of claims 1 to 12, wherein said gateway support node (4) is a Gateway GPRS Support Node.

14. The method of any of claims 1 to 13, wherein said transmitter/receivers (1, 2) are I-HSPA NodeB.

15. A system for optimized relocation in a mobile network comprising:
a source transmitter/receiver (1);
a target transmitter/receiver (2);
a serving support node (3); and
a gateway support node (4); wherein
said serving support node (3) submits a Direct Tunnel Context message to said gateway support node (4).

16. The system of claim 15, wherein said serving support node (3) submits an Update PDP Context Request message (S2BB; S7A) to said gateway support node (4).

17. The system of claim 16, wherein said gateway support node (4) submits an Update PDP Context Response message (S7B; S12) to said serving support node (3).

18. The system of any of claims 15 to 17, wherein said Direct Tunnel Context message (2BB; 7A) includes a Tunnel Endpoint Identifier information (t-NB-TEID) and an IP-adress information (t-NB-IP) used for said target transmitter/receiver (2).

19. The system of any of claims 15 to 18, wherein said serving support node includes a first serving support node (3A) and a second serving support node (3B), wherein said second serving support node (3B) submits said Direct Tunnel Context message (S2BB, S7A) to said gateway support node (4).

20. The system of claim 19, wherein
said target transmitter/receiver (2) submits a Relocation Preparation Request message (S2A) to said second serving support node (3B);
said second serving support node (3B) submits a transmitter/receiver Context Request message (S2B) to said first serving support node (3A);
said first serving support node (3A) temporarily stores context information;
said first serving support node (3A) submits a transmitter/receiver Context Request message (S2C) to said second serving support node (3B); and
said second serving support node (3B) submits a Relocation Preparation Acknowledge message (S2D) to said target transmitter/receiver (2).

21. The system of claim 20, wherein said second serving support node (3B) submits said Direct Tunnel Context message (S2BB, S7A) to said gateway support node (4) after said Relocation Preparation Request message (S2A).

22. The system of any of claims 15 to 21, wherein
said target transmitter/receiver (2) submits a Relocation Complete message (S7) to said second serving support node (3B), and
said second serving support node (3B) submits said Direct Tunnel Context message (S7A) after said Relocation Complete message (S7) to said gateway support node (4).

23. The system of any of claims 19 to 22, wherein
said second serving support node (3B) submits a Relocation Complete Acknowledge message (S8) to said target transmitter/receiver (2);
said second serving support node (3B) submits a Possible Complete Request message (8A) to said first serving support node (3A);
said first serving support node (3A) submits a Release Resources message (8B) to said target transmitter/receiver (2); and
said first serving support node (3A) submits a Possible Complete Response message (8C) to said second serving support node (3B).

24. The system of any of claims 19 to 23, wherein
said gateway support node (4) submits a PDU message (S10) to said source transmitter/receiver (1);
said source transmitter/receiver (1) submits a GTP Error Indication (S11) to said gateway support node (4);
said gateway support node (4) submits a further Direct Tunnel Context Request message (S12) to said first serving support node (3A);
said first serving support node (3A) submits a further Direct Tunnel Context Response message (S13) to said gateway support node (4) indicating a relocation information, a Tunnel Endpoint Identifier information (SGSN-TEID) and an IP-adress information (SGSN-IP) used for said second serving support node (3B); and
said gateway support node (4) submits a further Direct Tunnel Context Request message (S14) to said first serving support node (3A) indicating a relocation information.

25. The system of any of claims 19 to 24, wherein said first serving support node (3A) is part of a first core network (6A) and said second serving support node (3B) is part of a second core network (6B).

26. The system of any of claims 15 to 25, wherein said serving support nodes (3A, 3B) are Serving GPRS Support Nodes.

27. The system of any of claims 15 to 26, wherein said gateway support node (4) is a Gateway GPRS Support Node.

28. The system of any of claims 15 to 27, wherein said transmitter/receivers (1, 2) are I-HSPA NodeB.
